# EUROPEAN PATENT SPECIFICATION

(11) **EP 3 064 104 B1**
(45) Date of publication and mention of the grant of the patent: **13.09.2017**
(21) Application number: 16153485.4
(22) Date of filing: 29.01.2016
(51) Int. Cl.: A47J 31/60, A47J 31/44, A47J 31/46

(54) **METHOD AND APPARATUS FOR DISPENSING MILK**
VERFAHREN UND VORRICHTUNG ZUR AUSGABE VON MILCH
PROCÉDÉ ET APPAREIL DE DISTRIBUTION DE LAIT

(30) Priority: 11.02.2015 IT MI20150192
(43) Date of publication of application: 07.09.2016
(73) Proprietor: Gruppo Cimbali S.p.A., 20082 Binasco (MI) (IT)
(72) Inventor: QUARATESI, Guido, 20082 Binasco MI (IT); MAZZUOLI, Fabrizio, 20082 Binasco MI (IT)
(74) Representative: Acco, Stefania

(56) References cited:
- EP-A1- 1 878 370
- US-A- 6 099 878

## Description

The present invention concerns a method and an apparatus for preparing and dispensing foamed and non-foamed cold and hot milk, in particular a method and an apparatus comprising an automatic washing system of the apparatus after dispensing milk.

Automatic machines for preparing foamed and non-foamed milk, for preparing hot drinks with or without coffee, such as "latte" and cappuccino, have been developed. In such machines, the milk can be heated through the injection of steam into the liquid in a container by means of an immersion nozzle or through the passage of the liquid in a flow pass heater arranged in the hydraulic circuit.

Milk, particularly if hot, is a fatty substance that tends to become deposited along the walls of the ducts forming residues. It thus becomes necessary to regularly clean them and professional machines for dispensing milk-based drinks often foresee automatic washing cycles and a daily cleaning procedure of the hydraulic ducts that milk passes through.

Patent US 5,498,757 describes a milk foaming system, in which cold milk is sucked from a container into a milk frother and, once foamed, it is directed through a milk duct that passes through a hot water tank so as to heat the foamed milk. A sanitization system is provided that selectively rinses the flow path of the milk with a sterilizing fluid such as hot water from the hot water tank.

Patent US 7,527,818 relates to a method for producing milk froth or hot milk base drinks that foresees a continuous flow heater arranged on the suction line of a pump. The foamed milk is pushed by the pump into an outlet duct. To clean the continuous flow heater and the lines involved, a detergent fluid is introduced from a source into the suction line and pumped towards the outlet by the pump.

US 6,099,878 discloses a machine for aerating and heating milk for drinks, in which refrigerated milk is sucked by a pump and pushed through a milk line that introduces into a duct along which steam is pushed to combine milk with steam and convey the mixture towards the dispensing outlet. The valve of the steam duct stays open for a few seconds after the milk pump has been closed. A bleeder valve connected to the aeration line is open to the atmosphere for a few seconds, before the pump is closed to allow the residual milk in the milk line to go back into the container or be pushed into the steam line. The periodic cleaning of the milk dispensing system is actuated in response to a request by an operator and a detergent solution is introduced through all of the elements of the system that come into contact with the milk.

Recently, the interest in foamed cold milk based drinks has increased. Patent application EP 0 485 350 A1 describes a device for homogenizing, mixing and emulsifying products such as cream, coffee and milk, for example for whipping cream or creating milk and/or coffee froth, hot or cold. In the device described, a pump has the function of sucking the liquid product to be treated and subjecting it to mechanical energy. The suction duct of the pump is connected to the water mains for the washing step of the device, during which the suction duct itself places the detergent liquid in circulation.

In US 6,192,785, an automatic dispenser of foamed milk and ready-prepared coffee selectively dispenses cold and hot milk and/or coffee based drinks. Milk is sucked from a refrigerated container along a suction duct, in which air is introduced, by means of a pump and directed selectively in a duct equipped with a pass-through heater or in a duct connected to the outlet. A cleaning system is described that consists of replacing the milk container with a hot water container and actuating the buttons that start the dispensing of cold and hot milk so that the flow of washing water is discharged through the dispensing outlets. The operation is repeated until the water in outlet is completely clean.

The protein material contained in the milk is known to facilitate the formation of air bubbles (the protein material reduces surface tension, promoting the stability of air bubbles), but the same protein material progressively degrades as the temperature of the milk increases. With a device that uses a pump to suck cold milk and air it is possible to heat the air/milk mixture in outlet from the pump in a subsequent stage.

In an apparatus that heats milk as it passes along a duct it is also advantageous to carry out a washing cycle of the elements downstream of the pump, which have come into contact with the milk, such as the flow pass heater and the dispensing outlet (the latter often being part of a dispensing unit), after each time a milk based drink is dispensed and more in general between one dispensing and the next.

The Applicant has observed that, since successive dispensings can be very close to one another in time and it is difficult for the operator of the dispensing machine to consider the cleaning operation as well as managing the dispensing of the various drinks, it is advantageous for the washing cycle between successive dispensings not to influence the quality of the drinks dispensed. The Applicant has also understood that in an apparatus for producing cold and hot milk it becomes important for the washing operations of the ducts hydraulically connected to the dispensing outlet, after a dispensing operation, to take into account the temperature of the drink that has just been dispensed.

In preferred embodiments, the present disclosure relates to a method for washing a hydraulic milk dispensing system in an apparatus configured to produce foamed and non-foamed milk, cold and hot, wherein cold milk is sucked in a suction line of a pump and the selection to dispense cold or hot milk takes place through control of the injection of steam in a flow pass heater arranged along the outlet duct. Such an apparatus has the advantage of using a relatively simple hydraulic circuit, without the need for two separate lines towards the outlet for the cold and hot milk, and at the same time of passing quickly from cold dispensing to hot dispensing, e.g. at a temperature of between 55°C and 70°C. In the case of dispensing foamed milk, air is introduced in the suction duct upstream of the pump so that the pump sucks a mixture of milk and air.

The present invention discloses a method in accordance with claim 1.

Preferably, the first washing cycle and the second washing cycle are carried out automatically. Preferably, the steam duct is transverse to the outlet duct.

In the preferred embodiments, the apparatus comprises a flow pass heater arranged on the outlet duct through which the fluid passes pushed by the pump, wherein the heater is connected to the steam generator through the steam duct arranged transversely to the outlet duct for supplying steam in the outlet duct, inside the flow pass heater.

Preferably, the dispensing step, which precedes the first or the second washing cycle, comprises selectively dispensing cold or hot milk by sucking milk by means of the pump from the milk inlet duct and controlling the injection of steam to selectively enable and disable the injection of steam in the outlet duct during dispensing of hot milk and dispensing of cold milk, respectively. In the dispensing step, the milk or the milk and air mixture is conveyed through the outlet duct towards the dispensing outlet.

In the first washing step of the first and second washing cycle, the washing water sucked by the pump is conveyed through the outlet duct towards the dispensing outlet.

In some embodiments, the inlet of the pump is hydraulically and selectively connected to the milk inlet duct or to the washing inlet duct through a suction duct connected directly to the inlet of the pump.

In some embodiments, the pump is selectively connected to the milk inlet duct or to the water inlet duct through the control of an inlet diverting valve. For example, the inlet diverting valve is a three-way valve having two inlets connected respectively to the milk inlet duct and to the washing water inlet duct and an outlet connected to an end of the suction duct, the suction duct being connected, at an opposite end thereof, directly to the inlet of the pump.

In some embodiments, the milk inlet duct is connected at a first end thereof to a milk container and the washing inlet duct is connected at a first end thereof to a water source and the two inlet ducts intersect a suction duct at respective second opposite ends to the first ends in two distinct joining points, wherein the suction duct is directly connected to the inlet of the pump. On each of the inlet ducts a respective shut-off valve is arranged to close and open the respective inlet duct. Such shut-off valves can be controlled so that the pump selectively sucks milk or water.

The pair of milk and water inlet shut-off valves or the inlet diverting valve will also be indicated hereinafter with inlet flow selection device, with it being understood that such embodiments of the inlet flow selection device must not be considered as limiting.

In a preferred embodiment, the apparatus comprises a duct for the inlet of air that intersects the suction duct and in which an air shut-off valve is arranged so that, during a dispensing step, with the air shut-off valve in open position, the pump sucks a mixture of milk and air to dispense cold or hot foamed milk, whereas with the air shut-off valve closed the pump sucks milk to dispense cold or hot non-foamed milk.

In the case of a configuration in which the milk inlet duct opens out into a suction duct at a distinct joining point from that of the water inlet duct, the air duct is preferably arranged downstream of the joining point of the water inlet duct with the suction duct.

In some preferred embodiments, the first washing step of the first washing cycle and/or of the second washing cycle starts in a time shorter than 1 second, preferably less than 0.5 seconds, from the end of the dispensing step.

In some preferred embodiments, in the outlet duct, downstream of the position in which the steam duct opens out (or downstream of the pass-through heater), there is an outlet flow deviation element so that the outlet duct is selectively connected to the dispensing outlet or to a discharge.

Preferably, the outlet flow deviation element is a discharge valve. In an embodiment, the discharge valve is a diverting valve, preferably a three-way valve having one inlet and two outlets.

Preferably, the second washing cycle also comprises, after the first washing step that followed dispensing of hot milk from the dispensing outlet, carrying out a second washing step that comprises hydraulically connecting the outlet duct to the discharge, sucking water, by means of the pump, from the washing inlet duct and enabling the supply of steam in the outlet duct so that heated water passes through the outlet duct downstream of the position in which the steam duct opens out and comes out from the discharge.

Preferably, the second washing step of the second washing cycle follows in sequence after the first washing step so that the two steps are carried out continuously without stopping either the pump or the injection of steam in the outlet duct.

Preferably, the first washing cycle also comprises, after the first washing step that followed dispensing of cold milk from the dispensing outlet, carrying out a second washing step that comprises hydraulically connecting the outlet duct to the discharge, enabling the supply of steam in the outlet duct and sucking water, by means of the pump, from the washing inlet duct during the supply of steam so that heated water passes through the outlet duct downstream of the position in which the steam duct opens out and comes out from the discharge.

Preferably, the second washing step of the first washing cycle follows in sequence after the first washing step so that the first and the second step are carried out continuously without stopping the pump.

Preferably, the first washing step of the first washing cycle is carried out in a first time period and the first washing step of the second washing cycle is carried out in a second time period.

Preferably, the first and the second time period of the respective first washing steps of the first and of the second washing cycle are comprised between 1 and 3 seconds. Preferably, the first and the second time period are equal.

In an embodiment, the first and the second time period are 2 seconds.

Preferably, the second washing step of the first washing cycle is carried out in a third time period and the second washing step of the second washing cycle is carried out in a fourth time period. Preferably, the third and the fourth time period are comprised between 1 and 5 seconds. Preferably, the third and the fourth time period are equal. In an embodiment, the third and the fourth time period are 3 seconds.

In some embodiments the first and the second washing cycle comprise, respectively and after the respective second washing step, carrying out a third washing step that comprises disabling the supply of steam, keeping the outlet duct hydraulically connected to the discharge and sucking water by means of the pump, conveying unheated water to the discharge.

Preferably, the motor of the pump is actuated at the start of the dispensing step and the dispensing step and the first or the second washing cycle are carried out continuously without stopping the pump. In an embodiment, the motor of the pump is stopped at the end of the third washing step.

In some embodiments, the total time period to carry out the first washing cycle consisting of the first, second and third washing step is comprised between 7 and 15 seconds, preferably, between 8 and 13 seconds. In an embodiment, the total time to carry out the first washing cycle is 9 seconds.

In some embodiments, the total time period to carry out the second washing cycle consisting of the first, second and third washing step is comprised between 7 and 15 seconds, preferably, between 8 and 13 seconds. In an embodiment, the total time to carry out the second washing cycle is 9 seconds.

Preferably, the first washing step of the first and of the second washing cycle is carried out with the injection of air in the suction duct disabled. Preferably, the first, second and third washing step are carried out with the injection of air in the suction duct disabled.

In a further embodiment, after the first or second washing cycle, the method comprises a discharge step, following in sequence after the third washing step, in which the pump continues to be switched on with the milk and water inlet ducts in closed position, i.e. closing the hydraulic connection of both of the inlet ducts with the pump, and the outlet duct is hydraulically connected to the discharge. Preferably, during the discharge step, the injection of air in the suction duct is enabled.

In some embodiments, after the first and second washing cycle or, if present, after the discharge step, the method comprises a resetting step, in which the pump is switched off and the injection of air in the suction duct is enabled.

Preferably, the total time period to carry out the first washing cycle and the discharge and resetting steps is comprised between 7 and 20 seconds, preferably, between 9 and 15 seconds. In an embodiment, the total time to carry out the aforementioned steps, both after dispensing cold milk and after dispensing hot milk, is 12 seconds.

In accordance with the present disclosure, an apparatus for dispensing foamed and non-foamed cold and hot milk according to claim 15 is foreseen.

In some embodiments, the flow pass heater comprises a first inlet for the introduction of milk or the milk/air mixture pushed by the delivery of the pump, a second inlet for introducing steam and arranged with respect to the first so that the milk/air mixture and the steam are fed separately along two directions that intersect inside the heater, and an outlet arranged along the outlet duct at the opposite side of the heater with respect to the first inlet.

In the preferred embodiments, the steam is injected through a steam duct arranged transversely to the outlet duct and that opens out into the outlet duct through an inlet of the flow pass heater and the electronic control of steam injection comprises controlling the opening and closing of the steam duct to enable or disable, respectively, the supply of steam in the heater.

Preferably, a steam shut-off valve is arranged on the steam duct and the electronic control of steam injection is made through the control of the opening of the steam shut-off valve in the case of dispensing hot milk and the control of the steam shut-off valve in the closed position in the case of dispensing cold milk.

In the description and in the claims the expression first duct "arranged transversely" to a second duct means that the two ducts intersect one another at a non-zero angle, preferably not less than 20°. In a preferred embodiment, the direction of injection of the steam is perpendicular to the flow direction of the milk/air mixture in the outlet duct, i.e. the steam duct is arranged substantially perpendicular with respect to the outlet duct.

In the description and the following claims, the expression "dispensing step" generally means the operation of dispensing a milk-based drink as a whole, comprising possible preparation steps to the "actual" dispensing in which the drink is output from a dispensing outlet. For example, the preparation step can comprise a preliminary activation step of the pump so that the ducts are filled with milk that arrives at the dispensing unit (with the dispensing outlet closed), before the drink is dispensed in a cup. In automatic machines, the dispensing step is often carried out in accordance with a program stored in an electronic control unit.

The present invention will be described hereinafter in detail with reference to the attached drawings, in which some but not all of the practical embodiments are shown. The drawings are to be considered to be not-to- scale schematic representations.
Figure 1 schematically shows an apparatus for dispensing cold and hot milk, foamed and non-foamed, which comprises a washing system, in accordance with an embodiment of the present invention. The configuration of the apparatus shown in figure 1 is suitable for dispensing foamed cold milk.
Figure 2 is the apparatus of figure 1 in a configuration suitable for the first washing step, following dispensing of cold milk.
Figure 3 shows the apparatus of figure 1, in a configuration suitable for the second washing step that follows the first washing step of figure 2.
Figure 4 shows the apparatus of figure 1 in a configuration suitable for the third washing step, after the washing step of figure 3.
Figure 5 shows the apparatus of figure 1 configured for dispensing non-foamed hot milk.
Figure 6 is the apparatus of figure 1 in a configuration suitable for the first washing step that follows a step of dispensing hot milk.
Figure 7 shows an apparatus for dispensing cold and hot milk, foamed and non-foamed, in accordance with a further embodiment.

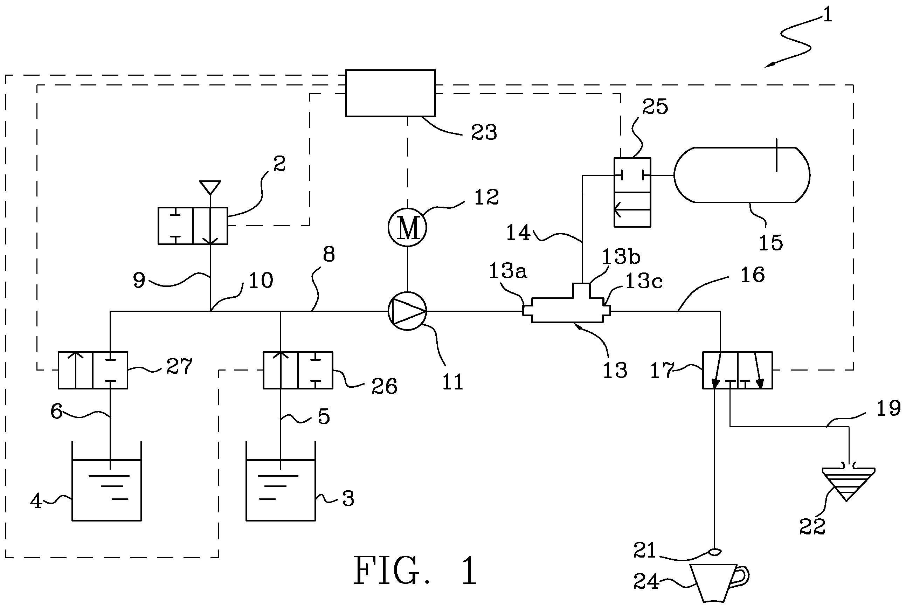

Figure 1 illustrates the diagram of an apparats for preparing and dispensing cold and hot milk-based drinks, foamed or non-foamed. In some preferred embodiments, the apparatus for dispensing cold or hot milk is part of a coffee machine, preferably an espresso coffee machine, which dispenses different coffee-based, milk and coffee-based and just milk-based drinks, e.g. cappuccino, latte macchiato, *caffè estivo* with foamed cold milk, hot non-foamed milk, etc.

Cold milk, preferably refrigerated at a temperature from 3°C to 5°C, is contained in a milk container 3. The cold milk is sucked from the container along a milk inlet duct 5 having a first end inserted in the container 3 and a second end in hydraulic connection, through a suction duct 8, with a pump 11. For example, the milk container 3 and the milk inlet duct 5 are housed in a refrigeration unit (not indicated in the figures). The pump 11 is actuated by a motor 12 and can for example be a geared pump. A washing fluid inlet duct 6 is in hydraulic connection with a washing fluid source 4, which in the embodiment of figure 1 is a container 4 in which a first end of the inlet duct 6 is immersed. In the preferred embodiments, the washing fluid is water and the following description will refer to such embodiments. In a different embodiment (not shown in the figures), the water source 4 is the water mains to which the inlet duct 6 is connected. At a second end, opposite the first end connected to the water source 4, the washing water inlet duct 6 is connected to the suction duct 8. In the embodiment of figure 1, the milk inlet duct 5 is connected, at its second end, opposite the one immersed in the container 3, with the suction duct 8 in a first joining point. The second end of the water inlet duct 6 is connected to an end of the suction duct 8 (figure 1) or at a second joining point that preferably is positioned upstream with respect to the first joining point of the second end of the milk inlet duct with the suction duct 8. In this way, the washing water can pass through the portion of the suction duct 8 in contact with the milk. The end of the suction duct 8 downstream of the joining point with the milk inlet duct 5 is connected directly to the inlet of the pump 11.

On the milk inlet duct 5 a milk shut-off valve 26 is arranged to close and open the milk inlet duct and thus, respectively, interrupt the flow of milk or place the milk duct in hydraulic connection with the suction duct 8 for the suction of the milk from the container 3. During a dispensing operation, the shut-off valve 26 is in the open position so as to allow the suction of milk by means of the pump 11.

On the water inlet duct 6 there is a water shut-off valve 27 to close and open the inlet duct 6 and thus, respectively, interrupt the flow of water or place the water duct 6 in hydraulic connection with the suction duct 8 for the suction of the water from the source 4. During the washing of the ducts, after a dispensing operation, the valve 27 is in the open position to allow the hydraulic connection between the water inlet duct and the inlet of the pump 11.

Preferably, the milk and water shut-off valves 26, 27 are solenoid valves controlled electronically by an electronic control unit (CPU) 23. The CPU 23 controls the shut-off valves 26 and 27 so that the valve 26 or the valve 27 is selectively open during the dispensing and washing steps, respectively. In some embodiments, there is at least one step in which both of the valves are in the closed position, between one dispensing step and a subsequent dispensing step, as described in greater detail hereinafter.

In the figures, the control lines that connect the CPU, respectively, to the shut-off valves 26 and 27 and in general the control lines between the CPU and the electronic devices of the apparatus are indicated with a broken line.

The CPU 23 electronically controls the activation and deactivation of the pump through the control of the motor 12 that actuates the pump.

Upstream of the pump 11, an air duct 9 is connected to the suction duct 8 at a joining point 10, which is preferably positioned downstream of the introduction point of the washing water 6 in the suction duct 8.

In a different embodiment, not shown in the figures, the air duct 9 intercepts the milk inlet duct 5, inserting into the portion of the duct 5, at a joining point with the duct 5 located downstream of the milk shut-off valve 26.

The air duct 9 has a free end for the inlet of ambient air, on which inlet a flow calibrator (not shown) can be arranged for regulating the air flow rate in inlet and therefore the amount of air introduced during the dispensing of a drink. Preferably, the apparatus comprises an air shut-off valve 2 for opening and closing the air duct 9, which is preferably a solenoid valve controlled by the electronic control unit 23.

An outlet duct 16 is connected to the delivery of the pump 11 and ends with a dispensing outlet 21. The dispensing outlet can have a spout-shaped or nozzle-shaped structure. In some embodiments, the dispensing outlet 21 is part of a dispensing unit (not shown) mounted on the end part of the outlet duct 16.

When the air shut-off valve 2 is in open position, for dispensing foamed milk, the pump 11 sucks milk from the container 3, which is intercepted by the air in the suction duct and the milk and air mixture is worked inside the pump 11 and output from the delivery of the pump in the outlet duct 16 for dispensing foamed milk from the dispensing outlet 21. In the case of dispensing non-foamed milk, the air shut-off valve 2 is in the closed position and the pump 11 sucks milk from the container along the suction duct 8.

The compressed milk and air mixture, in the case of dispensing foamed milk, is pushed by the pump 11 along the outlet duct 16 through a flow pass heater 13 arranged in the outlet duct and configured to heat the milk while it passes inside the heater. The flow pass heater 13 is connected to a steam generator 15 through a steam duct 14. The flow pass heater comprises a first inlet 13a for the introduction of the milk or the milk/air mixture pushed by the delivery of the pump. The steam duct 14 introduces pressurised steam in the flow pass heater 13 through a second inlet 13b of the heater, which is arranged with respect to the first inlet 13a so that the milk (or milk/air) and the steam are fed separately along two directions that intersect inside the heater. An example of a flow pass heater suitable for the present apparatus and method is described in EP 1 977 668 A1.

In the steam duct 14 a shut-off solenoid valve 25 is inserted, to close and open said duct and thus interrupt or permit the flow of steam to the heater 13. In the case in which it is wished to dispense cold milk, the shut-off valve 25 is in the closed position and the milk/air mixture or milk passes through the heater without undergoing heating. In the case in which it is wished to dispense hot milk, the steam shut-off valve 25 is in the open position and the milk is heated through the steam introduced in the second inlet 13b. Preferably, the shut-off solenoid valve 25 is a normally closed valve, i.e. the closed position is its rest position. The electronic control unit 23, which is connected to the solenoid valve 25 through a control line, actuates the opening of the solenoid valve and its closing to, respectively, enable and disable the supply of steam in the heater 13 and more generally in the outlet duct 16.

In known ways, the flow pass heater comprises an inner tubular chamber (not shown) along which the milk/air mixture runs and is mixed with the steam in the case in which the shut-off valve 25 is open. The milk/air mixture, in the case of dispensing foamed cold milk, or the milk/air mixture and steam, in the case of dispensing foamed hot milk, comes out from an outlet 13c of the heater arranged along the outlet duct, at the opposite side of the heater with respect to the first inlet 13a of the heater.

As described above, the apparatus in accordance with the present disclosure is also capable of dispensing non-foamed cold or hot milk, in the absence of air in the suction duct 8, i.e. air shut-off valve 2 in closed position.

On the outlet duct 16, downstream of the heater 13, a discharge valve 17 is arranged to selectively direct the fluid that runs along the outlet duct 16 to the dispensing outlet 21 or to a discharge 22. In an embodiment, the discharge valve 17 is a three-way diverting valve having one inlet and two outlets. Preferably, the discharge valve is a solenoid valve connected to the electronic control unit 23. The electronic control unit 23 controls the actuation of the discharge valve 17 to selectively direct the fluid running along the outlet duct 16, i.e. milk or milk/air mixture during a dispensing step or water during a washing step, to the dispensing outlet 21 or to the discharge 22. In figure 1, the discharge lines that opens out into the discharge 22 is indicated with reference numeral 19.

In known ways, in an automatic drinks dispensing machine, the dispensing operation has a dispensing time in which the drink is dispensed into a collection container, for example into a cup 24. At the end of the dispensing time, the milk shut-off valve 26 is closed and/or the pump 11 is stopped so that the amount of milk dispensed is the desired amount or, as in general happens in automatic machines, is that set in the control unit 23 for the dispensing step carried out in accordance with a predetermined program.

Since milk is a fatty substance that tends to deposit along the walls of the ducts forming residues, it is advantageous to carry out washing of the elements downstream of the pump and preferably of the suction duct, which have come into contact with the milk after each dispensing of a milk-based drink, between one dispensing and the next one. The apparatus in accordance with the present disclosure is configured to carry out a washing cycle after a milk dispensing step, in which the washing cycle comprises at least one washing step of the dispensing outlet.

The dispensing of milk-based drinks produced by automatic dispensing machines in offices or in public buildings are typically distributed unevenly through the day. Therefore, in common use of the machine, dispensing is not carried out with continuity, and, at some times of the day, the milk can sit in the hydraulic circuit between one dispensing operation and the next with possible formation of bacteria. The Applicant has observed that it is suitable to wash the dispensing outlet at the end of each dispensing step, by introducing washing water sucked from by the pump and pushed towards the dispensing outlet in the outlet duct. The Applicant has understood that, if the washing cycle is carried out at the end of each dispensing step and it is wished to clean the dispensing outlet quickly and efficiently, it is suitable for the washing step of the dispensing outlet to take into account the temperature at which the milk has just been dispensed. Indeed, if the washing step of the dispensing outlet is immediately after the dispensing of milk into the cup 24, it is very probable that the washing water itself ends up in the cup. Although the amount of water emitted by the dispensing outlet can be regulated by selecting the length of the outlet duct and/or the flow rate of the pump, the washing time and the volume of water must be such as to allow brief but effective washing. The Applicant has thus understood that the temperature of the washing water must be selected as a function of the temperature of the drink dispensed. In accordance with the present disclosure, a method is foreseen in which, if it was hot milk that was dispensed, the washing step of the dispensing outlet is carried out using hot water, whereas, if it was cold milk that was dispensed, the washing step of the dispensing outlet is carried out using cold water. In this way, even if the cup is not quickly moved from below the dispensing outlet, the (although small) amount of washing water will not detectably change the temperature of the drink dispensed.

Preferably, the washing cycle is carried out at the end of each foamed or non-foamed cold or hot milk dispensing step.

Figure 1 shows a configuration of the apparatus 1 for dispensing cold foamed milk, in which the milk and air shut-off valves 26 and 2 are in the open position for the suction by the pump 11 of a milk and air mixture (whereas the washing water shut-off valve 27 is closed), the steam shut-off valve 25 is in the closed position and the discharge valve 17 is switched towards the dispensing outlet 21. At the end of the step of dispensing cold milk (foamed or non-foamed), the CPU 23 controls the closing of the milk shut-off valve 26 and carries out a first washing cycle that comprises at least one washing step of the dispensing outlet 21, indicated hereinafter as first washing step.

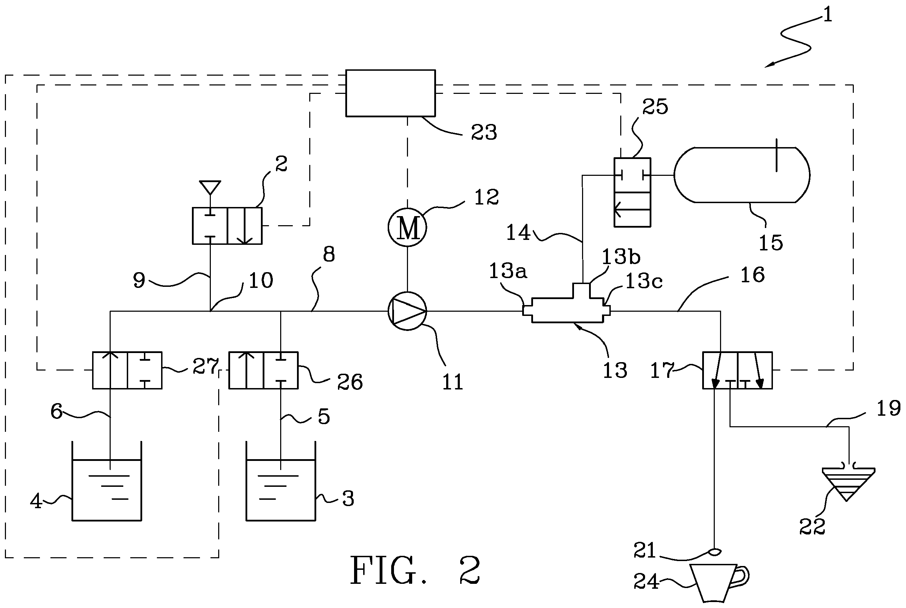

The configuration of the apparatus of figure 1 in the first washing step, after a step of dispensing cold milk, is shown in figure 2. The CPU controls the opening of the water shut-off valve 27, which can take place simultaneously with or consecutive to the closing of the milk valve 26, and the possible actuation of the pump, if at the end of the dispensing step the pump has been stopped. The positions of the steam shut-off valve (closed) and of the discharge valve (towards the dispensing outlet) stay the same as those of the dispensing step. The washing step of the dispensing outlet, which follows dispensing of cold milk, is carried out by sucking water, by means of the pump, from the washing inlet duct 6 and by keeping the supply of steam deactivated so as to clean the outlet duct 16 and the dispensing outlet 21 with unheated water. Preferably, at the start of the washing step, the CPU controls the closing of the air valve 2 so that the pump sucks only water and not also air.

Preferably, the washing cycle starts from 0 to 4 seconds after the end of the dispensing step, preferably from 0 to 2 seconds. In some preferred embodiments, the first washing step starts in a time shorter than 1 second, preferably less than 0.5 seconds, after the end of the dispensing step. In a particularly preferred embodiment, the first washing step is immediately subsequent the dispensing step, i.e. the two steps are carried out continuously. In the present description and claims, a process step immediately subsequent to a previous step is indicated with sequentially consecutive step to the previous step.

In the preferred embodiments, the washing step of the dispensing outlet is in sequentially consecutive to the dispensing step and, during said step, the pump stays activated from the dispensing step.

It should be understood that the first washing step in the case, in which it follows dispensing of non-foamed cold milk, is the same as what has just been described, with the difference that the air shut-off valve 2 stays closed both in the dispensing step and in the first washing step.

The Applicant has noted that, since there is no introduction of steam along the steam duct during the dispensing of cold milk, the milk tends to go up along the steam duct and thus could dirty such a duct with milk residues. In accordance with some preferred embodiments, after the washing step of the dispensing outlet that follows dispensing of cold milk, the first washing cycle further comprises a washing step with heated water directed to the discharge, indicated as second washing step. In this way, the steam runs along the steam duct and in particular along the section of duct 14 from the shut-off valve 25 to the inlet 13b of the heater and through the latter, cleaning said elements, but without a further amount of water being able to end up in the drink of the cup 24 and change the temperature thereof.

With reference to figures 1 and 2, at the end of the first washing step, the CPU 23 carries out a second washing step by controlling the opening of the steam shut-off valve 25 and the deviation of the discharge valve 17 of the water flow towards the discharge 22.

In some preferred embodiments, the second washing step starts in a time shorter than 1 second, preferably less than 0.5 seconds, from the end of the first washing step. Preferably, the second washing step is sequentially consecutive to the first washing step and the pump 11 stays switched on from the previous washing step with the washing water shut-off valve 27 open.

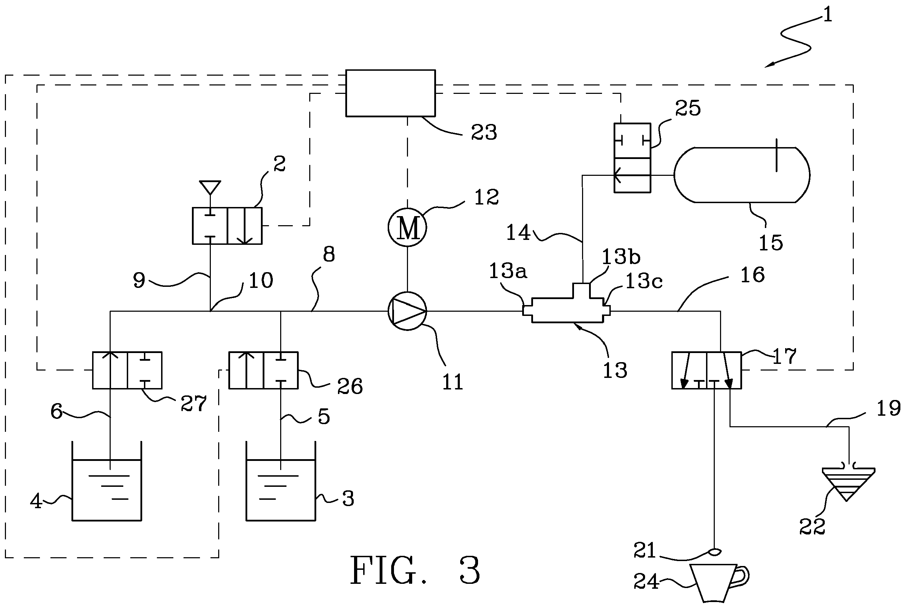

Figure 3 shows the apparatus of figures 1 and 2, in which the valves are arranged so as to carry out the second washing step, with heated water, which follows the first washing step of figure 2.

Since, in some embodiments, the washing cycle is carried out between successive drinks dispensing operations, if the next dispensing is cold milk, the heating of the ducts due to the passage of heated water could alter the temperature of the drink in outlet, especially if the milk is sucked from a refrigerated container at 3-5°C and must be served at a sufficiently low temperature.

In some embodiments, the first washing cycle that follows dispensing of cold milk comprises a washing step for cooling the hydraulic elements downstream of the pump, indicated hereinafter with third washing step.

In accordance with such embodiments, the first washing cycle comprises, at the end of the second washing step, a third washing step carried out by disabling the supply of steam in the outlet duct and by sucking water by means of the pump so as to push cold water from the pump towards the discharge. Preferably, the rinsing step is sequentially consecutive to the washing step with heated water and, at the end of this step, the CPU 23 controls the closing of the steam shut-off valve 25, keeping the washing water shut-off valve 27 open, the pump 11 switched on and the discharge valve 17 deviated towards the discharge 22.

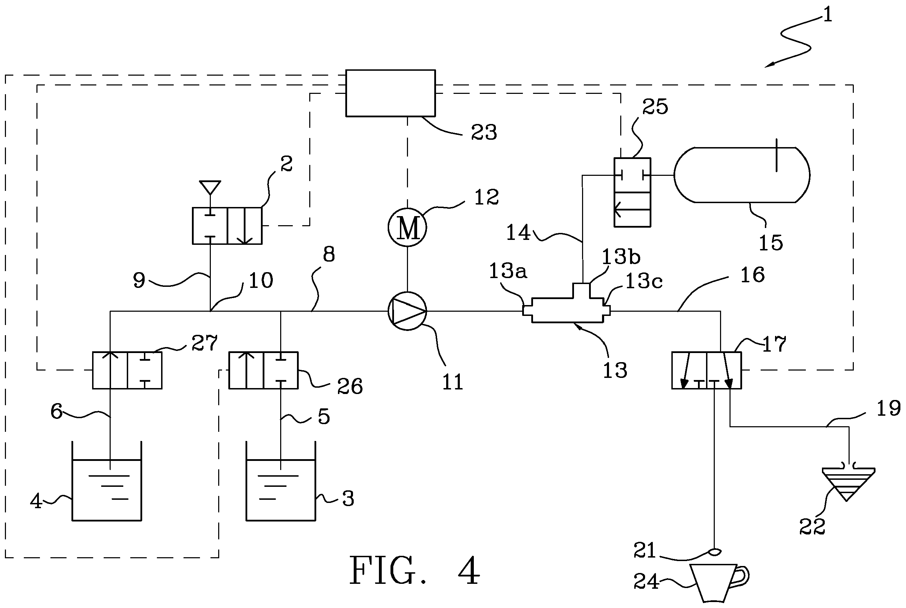

Figure 4 shows the apparatus of figure 1 in a configuration suitable for the third washing step, subsequent to the second washing step of figure 3.

Preferably, after the third washing step, there is a discharge step of the washing water from the discharge 22, closing the water shut-off valve 27, opening the air shut-off valve 2, and keeping the remaining operative conditions of the previous step, i.e. pump 11 activated, steam shut-off valve 25 in closed position, discharge valve 17 deviated towards the discharge 22 and milk shut-off valve 26 in closed position. It should be understood that during the discharge step, the milk and water shut-off valves 5 and 6 are both in the closed position.

Optionally, after the discharge step, there is a resetting step, preparing for the next dispensing. In such a step, the pump is switched off, the water shut-off valve 27 is closed, whereas the milk shut-off valve 26 is open so that the suction duct 8 is in hydraulic connection with the milk inlet duct 5 and, from the previous discharge step, the air shut-off valve 2 stays open. In this step, once the pump has stopped, the suction duct 8 and the milk inlet duct 5 are emptied of water by gravity. In the resetting step, the discharge valve 17 stays deviated towards the discharge 22.

Preferably, the discharge and resetting steps are sequentially consecutive one to another and the discharge step is sequentially consecutive to the first washing cycle and in particular to the third washing step so that there is continuity between the first washing cycle and the discharge and resetting steps.

Table 1 summarises the operative conditions for the step of dispensing cold milk, foamed and non-foamed, and the subsequent first washing cycle and discharge (S) and resetting (R) steps, wherein the steps are sequentially consecutive one to another, in accordance with an embodiment of the present invention. In the Table, position "1" of the discharge valve indicates the flow direction towards the dispensing outlet and position "2" indicates the flow direction towards the discharge.

**Table 1**

| | **Dispensing** | | **First washing cycle** | | | **Discharge and resetting** | |
|---|---|---|---|---|---|---|---|
| | **foamed** | **Non-foamed** | **Step 1** | **Step 2** | **Step 3** | **S** | **R** |
| Pump | ON | ON | ON | ON | ON | ON | OFF |
| Air valve | open | closed | closed | closed | closed | open | open |
| Steam valve | closed | closed | closed | open | closed | closed | closed |
| Milk valve | open | open | closed | closed | closed | closed | open |
| Water valve | closed | closed | open | open | open | closed | closed |
| Discharge valve | 1 | 1 | 1 | 2 | 2 | 2 | 2 |

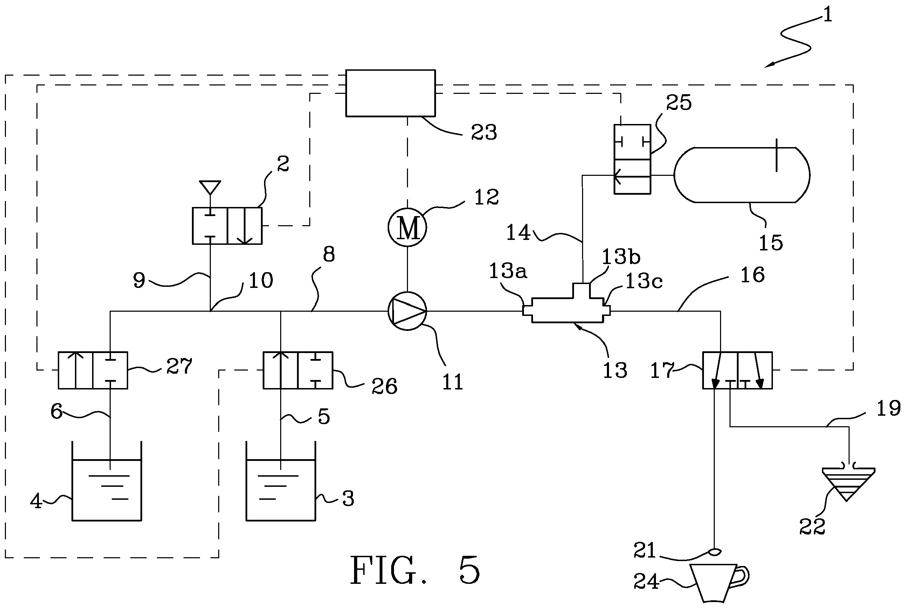

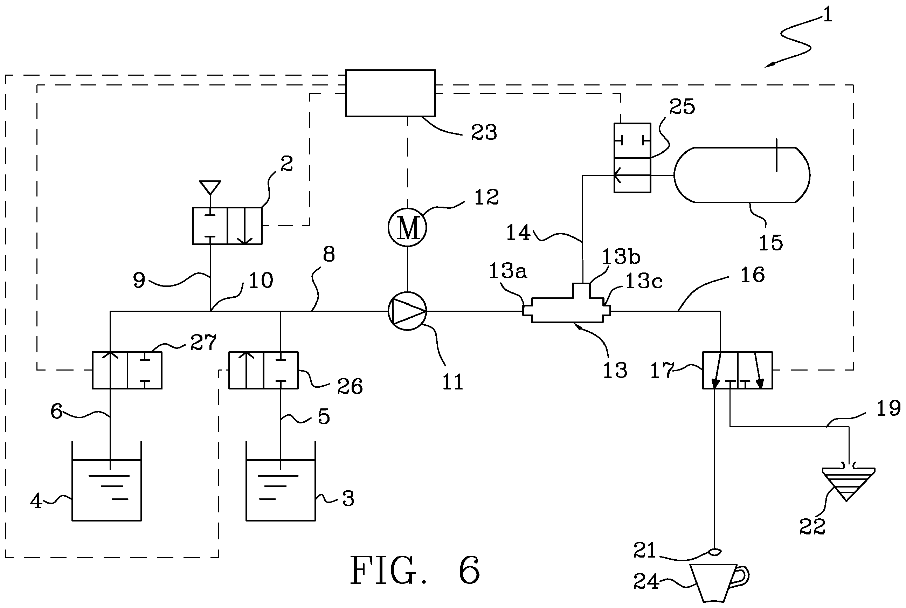

Figure 5 shows the apparatus of figure 1 configured for dispensing non-foamed hot milk, in which the milk shut-off valve 26 is in the open position for the suction by the pump 11 of milk (whereas the washing water shut-off valve 27 stays closed), the steam shut-off valve 25 is in the open position and the discharge valve 17 is switched towards the dispensing outlet 21. The hot milk-based drink is dispensed in a dispensing time, for example 10 seconds per 100 gr of milk. At the end of the step of dispensing hot milk (foamed or non-foamed), the CPU 23 controls the closing of the milk shut-off valve 26 and carries out a second washing cycle that comprises a first washing step of the dispensing outlet 21. The configuration of the apparatus of figure 5 in the first washing step, which follows a step of dispensing hot milk, is shown in figure 6. The CPU controls the opening of the water shut-off valve 27, which can take place simultaneously with or consecutive to the closing of the milk valve 26, and the possible actuation of the pump, if at the end of the dispensing step the pump was stopped. The positions of the steam shut-off valve (open) and of the discharge valve (towards the dispensing outlet) stay the same as those of the previous dispensing step. The first washing step, which follows dispensing of hot milk, is carried out by sucking water, by means of the pump, from the washing inlet duct and keeping the supply of steam enabled so as to clean the outlet duct 16 and the dispensing outlet 21 with heated water.

It should be understood that in the case of dispensing foamed hot milk, the configuration of the apparatus 1 is like in figure 5, except for the air valve 2 that is in the open position. Preferably, if it was foamed hot milk that was dispensed, at the start of the washing cycle, the CPU controls the closing of the air valve 2 so that the pump sucks only water and not also air and the configuration of the apparatus 1 during the first washing step is that of figure 6. In the case in which it was non-foamed hot milk that was dispensed, the air valve 2 stays closed during the second washing cycle.

Preferably, the first washing step of the second washing cycle is sequentially consecutive the dispensing step and, during said step, the pump stays switched on from the dispensing step.

Preferably, the second washing cycle comprises, after the first washing step, a second washing step that corresponds to the second washing step described with reference to figure 3. The presence of a second washing step with heated water is, in some embodiments, preferred to ensure better cleaning of the pass-through heater and of the steam duct. Preferably, the second washing step of the second washing cycle is sequentially consecutive to the first washing step and, during said second step, the pump stays switched on from the first washing step.

Preferably, the second washing cycle comprises, at the end of the second washing step with heated water, a third washing step, for cooling the ducts, carried out by disabling the supply of steam in the outlet duct, sucking water by means of the pump pushing cold water from the pump towards the discharge.

Preferably, the third washing step of the second washing cycle is sequentially consecutive to the second washing step and, at the end of the second step, the CPU 23 controls the closing of the steam shut-off valve 25, keeping the pump 11 activated and the discharge valve deviated towards the discharge 22. The third washing step of the second washing cycle corresponds to the third washing step of the first washing cycle described with reference to figure 4.

In some embodiments, after the third washing step of the second washing cycle, there is a discharge step of the washing water from the discharge 22 and, preferably a resetting step.

Table 2 summarises the operative conditions for the step of dispensing hot milk, foamed and non-foamed, and the subsequent second washing cycle and discharge (S) and resetting (R) steps, wherein the steps is sequentially consecutive one to another, in accordance with an embodiment of the present invention.

**Table 2**

| | **Dispensing** | | **Washing cycle** | | | **Discharge and resetting** | |
|---|---|---|---|---|---|---|---|
| | **foamed** | **Non-foamed** | **Step 1** | **Step 2** | **Step 3** | **S** | **R** |
| Pump | ON | ON | ON | ON | ON | ON | OFF |
| Air valve | open | closed | closed | closed | closed | open | open |
| Steam valve | open | open | open | open | closed | closed | closed |
| Milk valve | open | open | closed | closed | closed | closed | open |
| Water valve | closed | closed | open | open | open | closed | closed |
| Discharge valve | 1 | 1 | 1 | 2 | 2 | 2 | 2 |

In an embodiment, the time durations, t, of the single steps for the first and the second washing cycle and for the consecutive discharge and resetting steps are as follows:
Washing cycle
   Step 1 t= 2 sec
   Step 2 t= 3 sec
   Step 3 t= 2 sec
Discharge and resetting
   Discharge t= 2 sec
   Resetting t= 3 sec

In the present example, the washing cycle lasts a total of 7 seconds, whereas the discharge and resetting steps last a total of 5 seconds. In this embodiment, the complete cycle of washing and of configuration of the machine for subsequent dispensing (discharge and resetting) is 12 seconds. In known ways, the CPU can be programmed to wait for the end of the last step of cleaning and preparing the machine (e.g. end of the resetting step) before starting another dispensing, also in the case in which a user selects the dispensing before the end of the washing and, if present, discharge and resetting cycle.

In an embodiment, the amount of water emitted by the dispensing outlet in the first washing step of the first and second washing cycle lasting 2 seconds is comprised between 5 gr and 15 gr.

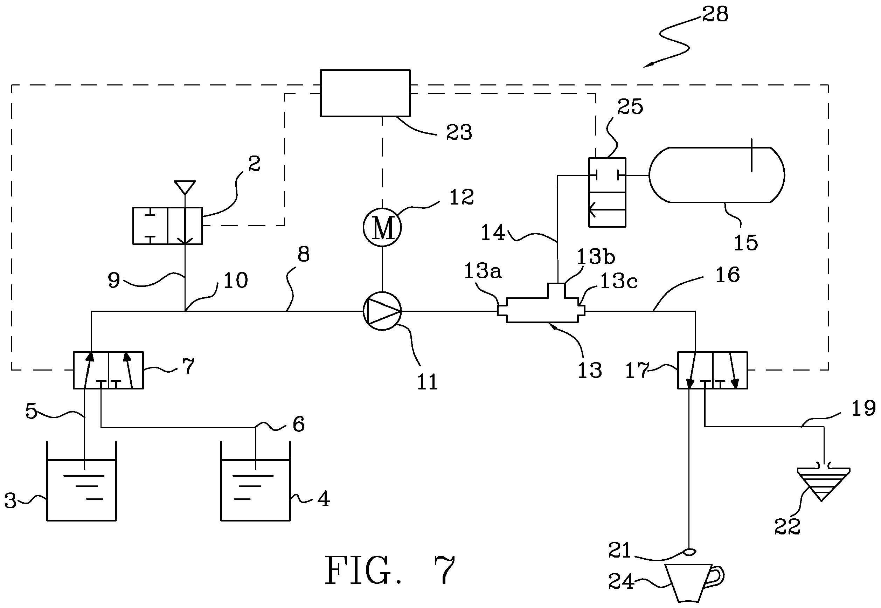

Figure 7 shows an apparatus for dispensing foamed and non-foamed cold and hot milk in accordance with a further embodiment. In figure 7, the milk and washing water inlet ducts have a different configuration with respect to the embodiment of figure 1. Numbers that are the same indicate elements that are the same as those shown in figure 1 or having the same functions. The apparatus 28 is configured for dispensing foamed cold milk. In the apparatus 28, the milk inlet duct 5 and the washing water inlet duct 6 are connected, with a respective end thereof, to two respective inlets of a three-way inlet diverting valve 7. The outlet of the diverting valve 7 is connected to the suction duct 8, in turn connected directly to the inlet of the pump 11. The air inlet duct 9 is arranged on the suction duct 8, downstream of the inlet diverting valve 7. The inlet diverting valve 7 is a solenoid valve controlled by the control unit 23 for selecting the suction of milk from the milk container 3 or of the washing water from the water source 4.

In this embodiment, the first and the second washing cycle correspond to those described with reference to figures 1-6, with the difference that, instead of an alternate closing and opening of the shut-off valves for the inlet of milk and water, the inlet diverting valve 7 is connected in inlet with the milk duct 5 during the dispensing step, whereas it is connected to the water duct 6 during the first or the second washing cycle. After the first or second washing cycle, the method comprises, in some embodiments, a resetting step, in which the pump 11 is switched off, the air valve 2 is open, the steam valve 25 is closed, the inlet diverting valve 7 is deviated towards the milk duct 5 and the outlet diverting valve 17 is diverted towards the discharge 22.

## Claims

1. A method of washing a cold and hot milk dispensing apparatus, which comprises a pump (11) having an inlet and a delivery side and driven by a motor (12), with the inlet being hydraulically selectively connected to a milk inlet duct (5) for milk suction or to a washing inlet duct (6) for water suction, an outlet duct (16) connected to the delivery side and ending with a dispensing outlet (21), wherein the outlet duct (16) is connected to a steam generator (15) via a steam duct (14) which opens into the outlet duct for supplying steam into the outlet duct (16), wherein steam supply into the outlet duct is enabled during hot milk dispensing and is disabled during cold milk dispensing,
**characterised in that** the method comprises, after a dispensing step:
- if cold milk was dispensed, carrying out a first washing cycle which comprises carrying out a first washing step comprising sucking in water by means of the pump (11) from the washing inlet duct (6) while disabling steam supply to thereby clean the outlet duct (16) downstream of the steam duct (14) and the dispensing outlet (21) with unheated water, and
- if hot milk was dispensed, carrying out a second washing cycle which comprises carrying out a first washing step comprising sucking in water by means of the pump (11) from the washing inlet duct (6) while enabling steam supply into the outlet duct (16) to thereby clean the outlet duct (16) downstream of the steam duct (14) and the dispensing outlet (21) with heated water.

2. The method as claimed in claim 1, wherein the apparatus comprises a flow pass heater (13) arranged on the outlet duct (15) with the fluid pushed by the pump (11) passing therethrough, wherein the heater (13) is connected to the steam generator (15) via the steam duct (14) arranged transversely to the outlet duct (16) for steam to be supplied into the outlet duct, within the flow pass heater (13).

3. The method as claimed in claim 1 or 2, wherein the dispensing step comprises selectively dispensing cold or hot milk by sucking in milk by means of the pump (11) from the milk inlet duct (5) and controlling steam injection to selectively enable and disable steam injection into the outlet duct (16) during hot milk dispensing and cold milk dispensing respectively.

4. The method as claimed in claim 3, wherein the first washing step of the first washing cycle is sequentially consecutive to the step of dispensing cold milk, such that the dispensing step and the first washing step are carried out continuously, without stopping the pump (11) and keeping steam supply disabled.

5. The method as claimed in claim 3, wherein the first washing step of the second washing cycle is sequentially consecutive to the step of dispensing hot milk, such that the dispensing step and the first washing step are carried out continuously, without stopping the pump (11) and keeping the steam supply enabled.

6. The method as claimed in any of the preceding claims, wherein the inlet of the pump is hydraulically and selectively connected to the milk inlet duct (5) or to the washing inlet duct (6) via a suction duct (8) directly connected to the inlet of the pump (11).

7. The method as claimed in claim 6, wherein the apparatus further comprises an air duct (9) for the inlet of air into the suction duct (8) and the dispensing step is a step of selective dispensing of hot frothed milk or cold frothed milk wherein the pump (11) sucks in a mixture of milk and air along the suction duct (8).

8. The method as claimed in any of the preceding claims, wherein an outlet flow deviation member (17) is arranged in the outlet duct (16) downstream from the position in which the steam duct opens out, to selectively direct the fluid that flows through the outlet duct (16) to the dispensing outlet (21) or to a discharge (22).

9. The method as claimed in claim 8, wherein after the first washing step that followed hot milk dispensing from the dispensing outlet, the second washing cycle further comprises carrying out a second washing step which comprises hydraulically connecting the outlet duct (16) to the discharge (22) by controlling the flow deviation member (17), sucking in water by means of the pump (11) from the washing inlet duct (6) while enabling steam supply into the outlet duct (16) for heated water to cross the outlet duct downstream of the position in which the steam duct (14) opens out and to flow out of the discharge (22).

10. The method as claimed in claim 9, wherein the second washing step is sequentially consecutive to the first washing step such that the two steps are carried out continuously without stopping the pump (11) and keeping enabled the steam injection into the outlet duct (16).

11. The method as claimed in claim 8, wherein after the first washing step that followed cold milk dispensing from the dispensing outlet (21), the first washing cycle further comprises carrying out a second washing step which comprises hydraulically connecting the outlet duct (16) to the discharge (22) by controlling the flow deviation member (17), sucking in water by means of the pump (11) from the washing inlet duct (6) while enabling steam supply into the outlet duct (11) for heated water to cross the outlet duct (16) downstream from the position in which the steam duct (14) opens out and to flow out of the discharge (22).

12. The method as claimed in claim 11, wherein the second washing step is sequentially consecutive to the first washing step such that the first and second steps are carried out continuously without stopping the pump (11).

13. The method as claimed in claim 8 wherein, after the first washing step, the first washing cycle further comprises:
- carrying out a second washing step which comprises hydraulically connecting the outlet duct (16) to the discharge (22) by controlling the flow deviation member (17), sucking in water by means of the pump (11) from the washing inlet duct (6) while enabling steam supply into the outlet duct (16) for heated water to cross the outlet duct downstream from the position in which the steam duct (14) opens out and to flow out of the discharge (22), and
- carrying out a third washing step which comprises disabling steam supply while keeping the outlet duct (16) hydraulically connected with the discharge (22) and sucking in water by means of the pump to convey unheated water to the discharge (22).

14. The method as claimed in claim 8 wherein, after the first washing step, the second washing cycle further comprises:
- carrying out a second washing step which comprises hydraulically connecting the outlet duct (16) to the discharge (22), sucking in water by means of the pump (11) from the washing inlet duct (6) while enabling steam supply into the outlet duct (16) for heated water to cross the outlet duct downstream from the position in which the steam duct (14) opens out and to flow out of the discharge (22), and
- carrying out a third washing step which comprises disabling steam supply while maintaining the outlet duct (16) hydraulically connected with the discharge (22) and sucking in water by means of the pump to convey unheated water to the discharge (22).

15. An apparatus for dispensing frothed or non-frothed cold and hot milk, which comprises:
- a milk inlet duct (5) hydraulically connected to a milk container (3) and a washing inlet duct (6) hydraulically connected to a water source (4);
- a pump (11) having an inlet and a delivery side, the pump being driven by a motor (12), with the inlet being hydraulically connected to a suction duct (8) which is selectively connected to the milk inlet duct (5) or to the washing inlet duct (6) by an inlet flow selection device (26, 27; 7);
- an air duct (9) for allowing air into the suction duct (8);
- an outlet duct (16) connected to the delivery side (11) and ending with a dispensing outlet (21);
- a flow pass heater (13) arranged on the outlet duct (15) with the fluid pushed by the pump (11) flowing therethrough, wherein the heater is connected to a steam generator (15) via a steam duct (14) transverse to the outlet duct (16) for steam to be supplied into the outlet duct, within the flow through heater, wherein a steam shut-off valve (25) is arranged in the steam duct and has a closed position and an open position for disabling and enabling steam supply into the heater (13) respectively, wherein the outlet duct (16) is connected, downstream from the heater (13), selectively to the dispensing outlet (21) or to a discharge (22) via an outlet flow deviation member (17);
**characterised in that** it comprises
- a duct washing system which comprises an electronic control unit (23) logically connected to the steam shut-off valve (25), to the outlet flow deviation member (17) and to the inlet flow selection device (25, 27; 7), wherein the control unit is programmed to control, after a milk dispensing operation, hydraulic connection of the pump to the water inlet duct by controlling the inlet flow selection device (26, 27; 7) and the activation and deactivation of the steam shut-off valve (25) to thereby selectively wash the outlet duct with hot or cold water depending on whether hot or cold milk was dispensed respectively.

## Patentansprüche

1. Verfahren zur Reinigung einer Vorrichtung zur Ausgabe von heißer und kalter Milch, welche eine Pumpe (11) mit einem Einlass und einer Druckseite umfasst und von einem Motor (12) angetrieben ist, wobei der Einlass hydraulisch wahlweise mit einem Milcheinlasskanal (5) zum Ansaugen von Milch oder mit einem Reinigungseinlasskanal (6) zum Ansaugen von Wasser verbunden ist, einem Auslasskanal (16), der mit der Druckseite verbunden ist und in einem Ausgabeauslass (21) endet, wobei der Auslasskanal (16) mit einem Dampferzeuger (15) über einen Dampfkanal (14) verbunden ist, der in den Auslasskanal einmündet, um dem Auslasskanal (16) Dampf zuzuführen, wobei die Dampfzufuhr in den Auslasskanal während der Heißmilchausgabe aktiviert und während der Kaltmilchausgabe deaktiviert ist, **dadurch gekennzeichnet, dass** das Verfahren nach dem Ausgabeschritt Folgendes umfasst:
- nach der Ausgabe von Kaltmilch, Ausführen eines ersten Reinigungszyklus, welcher das Ausführen eines ersten Reinigungsschrittes umfasst, umfassend das Ansaugen von Wasser aus dem Reinigungseinlasskanal (6) mittels der Pumpe (11) unter Deaktivierung der Dampfzufuhr, um hierdurch den Auslasskanal (16) stromabwärts des Dampfkanals (14) und den Ausgabeauslass (21) mit nicht erhitztem Wasser zu reinigen, und
- nach der Ausgabe von Heißmilch, Ausführen eines zweiten Reinigungszyklus, welcher das Ausführen eines ersten Reinigungsschrittes umfasst, umfassend das Ansaugen von Wasser aus dem Reinigungseinlasskanal (6) mittels der Pumpe (11) unter Aktivierung der Dampfzufuhr in den Auslasskanal (16), um hierdurch den Auslasskanal (16) stromabwärts des Dampfkanals (14) und den Ausgabeauslass (21) mit erhitztem Wasser zu reinigen.

2. Verfahren nach Anspruch 1, wobei die Vorrichtung einen Durchlauferhitzer (13) umfasst, der auf dem Auslasskanal (15) angeordnet ist mit der Flüssigkeit, die von der Pumpe (11) hier hindurchgedrückt wird, wobei der Erhitzer (13) mit dem Dampferzeuger (15) über den Dampfkanal (14) verbunden ist, der quer zum Auslasskanal (16) angeordnet ist, damit Dampf dem Auslasskanal innerhalb des Durchlauferhitzers (13) zugeführt wird.

3. Verfahren nach Anspruch 1 oder 2, wobei der Ausgabeschritt die wahlweise Ausgabe von kalter oder heißer Milch durch Ansaugen von Milch aus dem Milcheinlasskanal (5) mittels der Pumpe (11) und die Steuerung des Dampfeinspritzens umfasst, um die Dampfeinspritzung in den Auslasskanal (16) während der Heißmilchausgabe bzw. der Kaltmilchausgabe wahlweise zu aktivieren bzw. zu deaktivieren.

4. Verfahren nach Anspruch 3, wobei der erste Reinigungsschritt des ersten Reinigungszyklus sequentiell auf den Schritt der Kaltmilchausgabe folgt, derart, dass der Ausgabeschritt und der erste Reinigungsschritt kontinuierlich ausgeführt werden, ohne Stoppen der Pumpe (11) und deaktiviert Belassen der Dampfzufuhr.

5. Verfahren nach Anspruch 3, wobei der erste Reinigungsschritt des zweiten Reinigungszyklus sequentiell auf den Schritt der Heißmilchausgabe folgt, derart, dass der Ausgabeschritt und der erste Reinigungsschritt kontinuierlich ausgeführt werden, ohne Stoppen der Pumpe (11) und aktiviert Belassen der Dampfzufuhr.

6. Verfahren nach einem der vorstehenden Ansprüche, wobei der Einlass der Pumpe hydraulisch und wahlweise mit dem Milcheinlasskanal (5) oder dem Reinigungseinlasskanal (6) über einen Ansaugkanal (8) verbunden ist, der direkt mit dem Einlass der Pumpe (11) verbunden ist.

7. Verfahren nach Anspruch 6, wobei die Vorrichtung ferner einen Luftkanal (9) zum Einlassen von Luft in den Ansaugkanal (8) umfasst und der Ausgabeschritt ein Schritt der Ausgabe von wahlweise heißer, geschäumter Milch oder kalter geschäumter Milch ist, wobei die Pumpe (11) ein Gemisch von Milch und Luft durch den Ansaugkanal (8) ansaugt.

8. Verfahren nach einem der vorstehenden Ansprüche, wobei ein Auslassstrahlablenkungselement (17) in dem Auslasskanal (16) stromabwärts der Position angeordnet ist, an welcher der Dampfkanal ausmündet, um die Flüssigkeit, die durch den Auslasskanal (16) fließt, wahlweise zu dem Ausgabeauslass (21) oder zu einem Ablauf (22) zu leiten.

9. Verfahren nach Anspruch 8, wobei nach dem ersten Reinigungsschritt, der auf die Heißmilchausgabe aus dem Ausgabeauslass folgt, der zweite Reinigungszyklus ferner das Ausführen eines zweiten Reinigungsschrittes umfasst, der das hydraulische Verbinden des Auslasskanals (16) mit dem Ablauf (22) durch Steuern des Strahlablenkungselements (17), Ansaugen von Wasser aus dem Reinigungseinlasskanal (6) mittels der Pumpe (11) umfasst, unter Aktivierung der Dampfzufuhr in den Auslasskanal (16), damit erhitztes Wasser den Auslasskanal stromabwärts der Position durchströmt, an welcher der Dampfkanal (14) ausmündet und aus dem Ablauf (22) ausfließt.

10. Verfahren nach Anspruch 9, wobei der zweite Reinigungsschritt sequentiell auf den ersten Reinigungsschritt folgt, sodass die beiden Schritte kontinuierlich ausgeführt werden ohne Stoppen der Pumpe (11) und aktiviert Belassen der Dampfeinspritzung in den Auslasskanal (16).

11. Verfahren nach Anspruch 8, wobei nach dem ersten Reinigungsschritt, der auf die Kaltmilchausgabe aus dem Ausgabeauslass (21) folgt, der erste Reinigungszyklus ferner das Ausführen eines zweiten Reinigungsschrittes umfasst, der das hydraulische Verbinden des Auslasskanals (16) mit dem Ablauf (22) durch Steuern des Strahlablenkungselements (17), Ansaugen von Wasser aus dem Reinigungseinlasskanal (6) mittels der Pumpe (11) umfasst, unter Aktivierung der Dampfzufuhr in den Auslasskanal (11), damit erhitztes Wasser den Auslasskanal (16) stromabwärts der Position, an welcher der Dampfkanal (14) ausmündet, durchströmt und aus dem Ablauf (22) ausfließt.

12. Verfahren nach Anspruch 11, wobei der zweite Reinigungsschritt sequentiell auf den ersten Reinigungsschritt folgt, sodass der erste und der zweite Schritt kontinuierlich ohne Stoppen der Pumpe (11) ausgeführt werden.

13. Verfahren nach Anspruch 8, wobei nach dem ersten Reinigungsschritt der erste Reinigungszyklus ferner Folgendes umfasst:
- Ausführen eines zweiten Reinigungsschrittes, der das hydraulische Verbinden des Auslasskanals (16) mit dem Ablauf (22) durch Steuern des Strahlablenkungselements (17), Ansaugen von Wasser aus dem Reinigungseinlasskanal (6) mittels der Pumpe (11) umfasst, unter Aktivierung der Dampfzufuhr in den Auslasskanal (16), damit erhitztes Wasser den Auslasskanal stromabwärts der Position, an welcher der Dampfkanal (14) ausmündet, durchströmt und aus dem Ablauf (22) ausfließt, und
- Ausführen eines dritten Reinigungsschrittes, der das Deaktivieren der Dampfzufuhr umfasst, unter Belassen der hydraulischen Verbindung des Auslasskanals (16) mit dem Ablauf (22) und Ansaugen von Wasser mittels der Pumpe, um nicht erhitztes Wasser zum Ablauf (22) zu leiten.

14. Verfahren nach Anspruch 8, wobei nach dem ersten Reinigungsschritt der zweite Reinigungszyklus ferner Folgendes umfasst:
- Ausführen eines zweiten Reinigungsschrittes, der das hydraulische Verbinden des Auslasskanals (16) mit dem Ablauf (22), Ansaugen von Wasser aus dem Reinigungseinlasskanal (6) mittels der Pumpe (11) umfasst, unter Aktivierung der Dampfzufuhr in den Auslasskanal (16), damit erhitztes Wasser den Auslasskanal stromabwärts der Position, an welcher der Dampfkanal (14) ausmündet, durchströmt und aus dem Ablauf (22) ausfließt, und
- Ausführen eines dritten Reinigungsschrittes, der das Deaktivieren der Dampfzufuhr umfasst, unter Belassen der hydraulischen Verbindung des Auslasskanals (16) mit dem Ablauf (22) und Ansaugen von Wasser mittels der Pumpe, um nicht erhitztes Wasser zum Ablauf (22) zu leiten.

15. Vorrichtung zur Ausgabe von geschäumter oder nicht-geschäumter kalter und heißer Milch, welche Folgendes umfasst:
- einen Milcheinlasskanal (5), der mit einem Milchbehälter (3) und einem hydraulisch mit einer Wasserquelle (4) verbundenen Reinigungseinlasskanal (6) hydraulisch verbunden ist;
- eine Pumpe (11) mit einem Einlass und einer Druckseite, wobei die Pumpe von einem Motor (12) angetrieben ist, wobei der Einlass hydraulisch mit einem Ansaugkanal (8) verbunden ist, der wahlweise mit dem Milcheinlasskanal (5) oder dem Reinigungseinlasskanal (6) durch eine Einlassflussauswahleinrichtung (26, 27; 7) verbunden ist;
- einen Luftkanal (9), um Luft in den Ansaugkanal (8) einzulassen;
- einen Auslasskanal (16), der mit der Druckseite (11) verbunden ist und in einem Ausgabeauslass (21) endet;
- einen Durchlauferhitzer (13), der auf dem Auslasskanal (15) angeordnet ist mit der Flüssigkeit, die von der Pumpe (11) hier hindurch gedrückt wird, wobei der Erhitzer mit einem Dampferzeuger (15) über einen Dampfkanal (14) verbunden ist, der quer zum Auslasskanal (16) angeordnet ist, damit dem Auslasskanal innerhalb des Durchlauferhitzers Dampf zugeführt wird, wobei ein Dampfsperrventil (25) in dem Dampfkanal angeordnet ist, das eine geschlossene und eine offene Stellung aufweist, um die Dampfzufuhr in den Erhitzer (13) zu deaktivieren bzw. zu aktivieren, wobei der Auslasskanal (16) stromabwärts des Erhitzers (13) über ein Auslass-Strahlablenkungselement (17) wahlweise mit dem Ausgabeauslass (21) oder einem Ablauf (22) verbunden ist; **dadurch gekennzeichnet, dass** sie Folgendes umfasst:
- ein Kanalreinigungssystem, welches eine elektronische Steuereinheit (23) umfasst, die logisch mit dem Dampfsperrventil (25), dem Auslass-Strahlablenkungselement (17) und der Einlassflussauswahleinrichtung (25, 27; 7) verbunden ist, wobei die Steuereinheit programmiert ist, um nach dem Milchausgabebetrieb die hydraulische Verbindung der Pumpe mit dem Wassereinlasskanal durch Steuerung der Einlassflussauswahleinrichtung (26, 27; 7) und Aktivierung bzw. Deaktivierung des Dampfsperrventils (25) zu steuern, um dadurch wahlweise den Auslasskanal mit heißem oder kaltem Wasser in Abhängigkeit davon zu reinigen, ob heiße oder kalte Milch ausgegeben wurde.

## Revendications

1. Méthode de lavage d'un dispositif de distribution de lait chaud et froid comprenant une pompe (11) présentant un côté admission et un côté refoulement et entraînée par un moteur (12), le côté admission étant connecté de façon hydraulique à une conduite d'admission de lait (5) pour l'aspiration du lait ou à une conduite d'admission de lavage (6) pour l'aspiration de l'eau, une conduite de sortie (16) connectée au côté refoulement et se terminant par une sortie de distribution (21), la conduite de sortie (16) étant connectée à un générateur de vapeur (15) aux moyens d'une conduite à vapeur (14) qui s'ouvre dans la conduite de sortie pour fournir de la vapeur dans la conduite de sortie (16), la fourniture de vapeur dans la conduite de sortie étant activée pendant la distribution de lait chaud et désactivée pendant la distribution de lait froid, **caractérisée en ce que** la méthode comprend, après une phase de distribution :
- en cas de distribution du lait froid, l'exécution d'un premier cycle de lavage, comprenant l'exécution d'une première phase de lavage comprenant l'aspiration de l'eau à l'aide de la pompe (11) à partir de la conduite d'admission de lavage (6) tout en désactivant la fourniture de vapeur pour ainsi nettoyer la conduite de sortie (16) en aval de la conduite à vapeur (14) et la sortie de distribution (21) avec de l'eau non chauffée, et
- en cas de distribution du lait chaud, l'exécution d'un deuxième cycle de lavage, comprenant l'exécution d'une première phase de lavage comprenant l'aspiration de l'eau à l'aide de la pompe (11) à partir de la conduite d'admission de lavage (6) tout en activant la fourniture de vapeur dans la conduite de sortie (16) pour ainsi nettoyer la conduite de sortie (16) en aval de la conduite à vapeur (14) et la sortie de distribution (21) avec de l'eau chauffée.

2. Méthode selon la revendication 1, dans laquelle le dispositif comprend un réchauffeur de passage de flux (13) disposé sur la conduite de sortie (15), le fluide poussé par la pompe (11) le traversant, dans lequel le réchauffeur (13) étant connecté au générateur de vapeur (15) via la conduite à vapeur (14) disposée de façon transversale sur la conduite de sortie (16), pour la fourniture de vapeur dans la conduite de sortie à l'intérieur du réchauffeur de passage de flux (13).

3. Méthode selon la revendication 1 ou 2, dans laquelle la phase de distribution comprend sélectivement la distribution du lait froid ou du lait chaud par l'aspiration du lait à l'aide de la pompe (11) à partir de la conduite d'admission de lait (5) et le contrôle de l'injection de la vapeur pour activer ou désactiver sélectivement l'injection de la vapeur dans la conduite de sortie (16) pendant la distribution de lait chaud ou la distribution de lait froid, respectivement.

4. Méthode selon la revendication 3, dans laquelle la première phase de lavage du premier cycle de lavage est de façon séquentielle consécutive à la phase de distribution de lait froid, de sorte que la phase de distribution et la première phase de lavage soient exécutées de façon continue, sans arrêter la pompe (11) et en maintenant désactivée la fourniture de vapeur.

5. Méthode selon la revendication 3, dans laquelle la première phase de lavage du second cycle de lavage est de façon séquentielle consécutive à la phase de distribution de lait chaud, de sorte que la phase de distribution et la première phase de lavage soient exécutées de façon continue, sans arrêter la pompe (11) et en maintenant activée la fourniture de vapeur.

6. Méthode selon l'une quelconque des revendications précédentes, **caractérisée en ce que** l'admission de la pompe est connectée de façon hydraulique et sélective à la conduite d'admission de lait (5) ou à la conduite d'admission de lavage (6) via une conduite d'aspiration (8) directement connectée à l'admission de la pompe (11).

7. Méthode selon la revendication 6, dans laquelle le dispositif comprend en outre une conduite d'air (9) pour l'admission de l'air dans la conduite d'aspiration (8) et la phase de distribution est une phase de distribution sélective de lait mousseux chaud ou de lait mousseux froid, dans laquelle la pompe (11) aspire un mélange de lait et d'air le long de la conduite d'aspiration (8).

8. Méthode selon l'une quelconque des revendications précédentes, dans laquelle un élément de déviation de flux de sortie (17) est disposé dans la conduite de sortie (16) en aval de la position dans laquelle s'ouvre la conduite à vapeur, pour diriger sélectivement le fluide qui s'écoule à travers la conduite de sortie (16) vers la sortie de distribution (21) ou vers un système d'évacuation (22).

9. Méthode selon la revendication 8, dans laquelle après la première phase de lavage qui a suivi la distribution de lait chaud à partir de la sortie de distribution, le deuxième cycle de lavage comprend en outre l'exécution d'une deuxième phase de lavage comprenant la connexion hydraulique de la conduite de sortie (16) au système d'évacuation (22) en contrôlant l'élément de déviation de flux (17), l'aspiration de l'eau à l'aide de la pompe (11) à partir de la conduite d'admission de lavage (6) tout en activant la fourniture de vapeur dans la conduite de sortie (16) de sorte que l'eau chauffée passe par la conduite de sortie en aval de la position dans laquelle la conduite de vapeur (14) s'ouvre et s'écoule à travers le système d'évacuation (22).

10. Méthode selon la revendication 9, dans laquelle la deuxième phase de lavage est de façon séquentielle consécutive à la première phase de lavage, de sorte que les deux phases sont exécutées de façon continue, sans arrêter la pompe (11) et en maintenant activée l'injection de vapeur dans la conduite de sortie (16).

11. Méthode selon la revendication 8, dans laquelle après la première phase de lavage qui a suivi la distribution de lait froid à partir de la sortie de distribution, le premier cycle de lavage comprend en outre l'exécution d'une deuxième phase de lavage comprenant la connexion hydraulique de la conduite de sortie (16) au système d'évacuation (22) en contrôlant l'élément de déviation de flux (17), l'aspiration de l'eau à l'aide de la pompe (11) à partir de la conduite d'admission de lavage (6) tout en activant la fourniture de vapeur dans la conduite de sortie (16) de sorte que l'eau chauffée passe par la conduite de sortie en aval de la position dans laquelle la conduite de vapeur (14) s'ouvre et s'écoule hors du système d'évacuation (22).

12. Méthode selon la revendication 11, dans laquelle la deuxième phase de lavage est de façon séquentielle consécutive à la première phase de lavage, de sorte que la première et la deuxième sont exécutées de façon continue, sans arrêter la pompe (11).

13. Méthode selon la revendication 8, dans laquelle, après la première phase de lavage, le premier cycle de lavage comprend en outre :
- l'exécution d'une deuxième phase de lavage comprenant la connexion hydraulique de la conduite de sortie (16) au système d'évacuation (22) en contrôlant l'élément de déviation de flux (17), l'aspiration de l'eau à l'aide de la pompe (11) à partir de la conduite d'admission de lavage (6) tout en activant la fourniture de vapeur dans la conduite de sortie (16) de sorte que l'eau chauffée passe par la conduite de sortie en aval à partir de la position dans laquelle la conduite de vapeur (14) s'ouvre et s'écoule hors du système d'évacuation (22) ; et
- l'exécution d'une troisième phase de lavage comprenant la désactivation de la fourniture de vapeur tout en maintenant la conduite de sortie (16) connectée de façon hydraulique au système d'évacuation (22) et en aspirant l'eau à l'aide de la pompe pour conduire l'eau non chauffée vers le système d'évacuation (22).

14. Méthode selon la revendication 8, dans laquelle après la première phase de lavage, le deuxième cycle de lavage comprend en outre :
- l'exécution d'une deuxième phase de lavage comprenant la connexion hydraulique de la conduite de sortie (16) au système d'évacuation (22), en aspirant l'eau à l'aide de la pompe (11) à partir de la conduite d'admission de lavage (6) tout en activant la fourniture de vapeur dans la conduite de sortie (16) de sorte que l'eau chauffée passe par la conduite de sortie en aval à partir de la position dans laquelle la conduite de vapeur (14) s'ouvre et s'écoule hors du système d'évacuation (22) ; et
- l'exécution d'une troisième phase de lavage comprenant la désactivation de la fourniture de vapeur tout en maintenant la conduite de sortie (16) connectée de façon hydraulique au système d'évacuation (22) et en aspirant l'eau à l'aide de la pompe pour conduire l'eau non chauffée vers le système d'évacuation (22).

15. Dispositif de distribution du lait mousseux ou non-mousseux chaud et froid, comprenant :
- une conduite d'admission de lait (5) connectée de façon hydraulique à un conteneur de lait (3) et une conduite d'admission de lavage (6) connectée de façon hydraulique à une source d'eau (4) ;
- une pompe (11) présentant un côté admission et un côté refoulement, la pompe étant entraînée par un moteur (12), le côté admission étant connecté de façon hydraulique à une conduite d'aspiration (8) connectée sélectivement à la conduite d'admission de lait (5) ou à la conduite d'admission de lavage (6) à l'aide d'un dispositif de sélection de flux d'admission (26, 27, 7) ;
- une conduite d'air (9) pour permettre la présence d'air dans la conduite d'aspiration (8) ;
- une conduite de sortie (16) connectée au côté refoulement (11) et se terminant par une sortie de distribution (21) ;
- un réchauffeur de passage de flux (13) disposé sur la conduite de sortie (15), le fluide poussé par la pompe (11) le traversant, le réchauffeur étant connecté à un générateur de vapeur (15) via une conduite à vapeur (14) disposé de façon transversale à la conduite de sortie (16) pour la fourniture de vapeur dans la conduite de sortie, à l'intérieur du flux à travers le réchauffeur, une vanne d'arrêt de vapeur (25) étant disposée dans la conduite à vapeur et présentant une position fermée et une position ouverte, pour désactiver et activer la fourniture de vapeur dans le réchauffeur (13) respectivement, la conduite de sortie (16) étant connectée, en aval du réchauffeur (13), sélectivement à la sortie de distribution (21) ou au système d'évacuation (22) via un élément de déviation de flux de sortie (17) ;
**caractérisé en ce qu'**il comprend
- un système de lavage de la conduite comprenant une unité de commande électronique (23) logiquement connectée à la vanne d'arrêt de vapeur (25), à l'élément de déviation de flux de sortie (17) et au dispositif de sélection de flux d'admission (25, 27 ; 7), l'unité de commande étant programmée pour contrôler, après une opération de distribution de lait, la connexion hydraulique de la pompe à la conduite d'admission d'eau en contrôlant le dispositif de sélection de flux d'admission (26, 27 ; 7) et l'activation et la désactivation de la vanne d'arrêt de vapeur (25) pour ainsi laver sélectivement la conduite de sortie avec de l'eau chaude ou froide, en fonction de ce que le lait distribué était chaud ou froid, respectivement.
